# EUROPÄISCHE PATENTSCHRIFT

(11) **EP 0 866 247 B1**
(45) Veröffentlichungstag und Bekanntmachung des Hinweises auf die Patenterteilung: **23.04.2003**
(21) Anmeldenummer: 97118666.3
(22) Anmeldetag: 28.10.1997
(51) Int. Cl.: F16J 15/32

(54) **Radialwellendichtring**
Radial shaft seal
Joint à lèvres radiales

(30) Priorität: 19.03.1997 DE 19711400
(43) Veröffentlichungstag der Anmeldung: 23.09.1998
(73) Patentinhaber: Carl Freudenberg KG, 69469 Weinheim (DE)
(72) Erfinder: Hintenlang, Günter, 69518 Absteinach (DE)

(56) Entgegenhaltungen:
- DE-A- 3 038 717
- DE-U- 29 603 159
- FR-A- 2 745 618
- US-A- 5 299 677

## Beschreibung

Die Erfindung befaßt sich mit einem Radialwellendichtring mit zumindest einer dynamisch beanspruchten ersten Dichtung und zumindest einer statisch beanspruchten zweiten Dichtung gemäß dem Oberbegriff des Patentanspruchs 1.

Aus DE 296 03 159 U ist ein Verschlußdeckel bekannt, welcher insbesondere für Motor- und Getriebegehäuse bei Kraftfahrzeugen bestimmt ist. Durch diesen Verschlußdeckel geht eine Welle, welche mittels einer ersten dynamisch beanspruchten Dichtung abgedichtet wird. Gegenüber dem ortsfesten Gehäuse weist der Verschlußdeckel eine statisch beanspruchte zweite Dichtung auf. Beide Dichtungen sind über ein vom Verschlußdeckel gebildetes Stützringteil verbunden. Somit ist die Auslegung dieses Radialdichtrings von der Ausgestaltung des Gehäuses abhängig, und bei der statisch beanspruchten Dichtung kann es bei der Montage und auch im Funktionseinsatz zu Überbeanspruchungen hinsichtlich Biege- und Schubbelastungen mit der Folge einer Ablösung der statisch beanspruchten Dichtung vom Stützringteil kommen.

Aus EP 0 579 869 B1 ist ein Radialwellendichtring bekannt, welcher in eine Führungshülse für ein Kupplungsausrücklager eines Getriebes integriert ist. Hierbei sind die beiden Dichtungen einstellbar ineinander übergehend ausgebildet und am Stützring festgelegt. An der Kupplungsführungshülse ist radial außenseitig ein Axialvorsprung vorgesehen, welcher die statisch beanspruchte zweite Dichtung vollständig überdeckt. Der Schutz der statisch beanspruchten zweiten Dichtung beispielsweise vor mechanischen Überbeanspruchungen ist aber von der Ausgestaltung des Axialvorsprungs der Kupplungsführungshülse abhängig.

Der Erfindung liegt die Aufgabe zugrunde, einen Radiatwellendichtring der gattungsgemäßen Art bereitzustellen, welcher eine vom Aufnahmegehäuse unabhängige Abstützung der statisch beanspruchten Dichtung mit möglichst günstigen Herstellungskosten und weitgehend geschützt vor Ablösebeanspruchungen vom Stützring gestattet.

Nach der Erfindung wird hierzu ein Radialwellendichtring bereitgestellt, dessen Merkmale im Patentanspruch 1 angegeben sind.

Bevorzugte Weiterbildungen der Erfindung sind in den Ansprüchen 2 bis 5 wiedergegeben.

Bei dem erfindungsgemäßen Radialwellendichtring hat der Stützring einen Axialvorsprung, der die zweite Dichtung zur Begrenzung ihrer elastischen Verformung zumindest teilweise überdeckt und an ein abzudichtendes Gehäuse anlegbar ist. Hierbei ist von Vorteil, daß der Stützring, an dem die erste und die zweite Dichtung festgelegt sind, den Axialvorsprung zum Schutz der zweiten Dichtung aufweist. Unabhängig von der Ausgestaltung des Gehäuses ist die zweite Dichtung vor äußeren Einflüssen und vor mechanischen Überbelastung geschützt. Der Stützring weist einen im wesentlichen S-förmigen Querschnitt auf, und der Zentriersitz wird durch die Außenumfangsfläche des Axialstegs gebildet, der die Radialstege des Stützrings verbindet. Ein derart ausgebildeter Stützring läßt sich problemlos und kostengünstig aus einem tiefziehbaren Blech herstellen. Einer zusätzlichen, arbeits- und kostenintensiven Bearbeitung des Zentriersitzes bedarf es nicht. Ferner verhindert die sich in radialer Richtung erstreckende Wellung an der dem Gehäuse zugewandten Seite der zweiten Dichtung eine Ablösung derselben vom Stützring, da die zweite Dichtung hierdurch ausweichen kann und sich hierdurch zu starke Biege- und Schubbeanspruchungen an der zweiten Dichtung vermeiden lassen.

Vorteilhafterweise besteht der Stützring aus einem zähharten Werkstoff. Bevorzugt besteht der Stützing aus einem tiefziehbaren Blech. Hierbei ist von Vorteil, daß es sich dabei um einen nichtkriechenden Werkstoff handelt, der dem Gehäuse über seinen Zentriersitz während der gesamten Gebrauchsdauer in stets gleicher Position zugeordnet ist. Die Verwendung eines Stützrings aus metallischem Werkstoff ist außerdem im Hinblick auf eine kostengünstige Herstellbarkeit des Radialwellendichtrings von hervorzuhebendem Vorteil. Von metallischen Werkstoffen abweichende Werkstoffe für den Stützring sind ebenfalls denkbar. Beispielsweise können polymere Werkstoffe zur Anwendung gelangen, sofern sie während einer langen Gebrauchsdauer unter Last nur eine sehr geringe Relaxation aufweisen.

Die erste und die zweite Dichtung können aus voneinander abweichenden, separat an den Stützring angespritzten Elastomerwerkstoffen bestehen. Hierbei ist von Vorteil, daß die voneinander abweichenden Werkstoffe der beiden Dichtungen an den jeweiligen Anwendungsfall optimal angepaßt werden können. Im Hinblick auf eine vereinfachte Herstellbarkeit des Radialwellendichtrings können die erste und die zweite Dichtung aus einem übereinstimmenden Elastomerwerkstoff bestehen.

Im Hinblick auf eine vereinfachte Herstellbarkeit des Radialwellendichtrings besteht auch die Möglichkeit, daß die beiden Dichtungen aus einem übereinstimmenden Elastomerwerkstoff bestehen und beispielsweise einstückig ineinander übergehend ausgebildet sind.

Die zweite Dichtung kann einen im wesentlichen rechteckigen Querschnitt aufweisen und mit dem Innenumfang des Axialvorsprungs sowie der dem abzudichtenden Raum zugewandten Seite des radial äußeren Radialstegs adhäsiv verbunden sein. Die beiden Dichtungen sind bevorzugt mit dem Stützring vulkanisiert. Durch eine derartige Ausgestaltung ist die zweite Dichtung vom Stützring auf der dem Gehäuse abgewandten Seite vollständig umschlossen und daher vor äußeren Einflüssen ausgezeichnet geschützt.

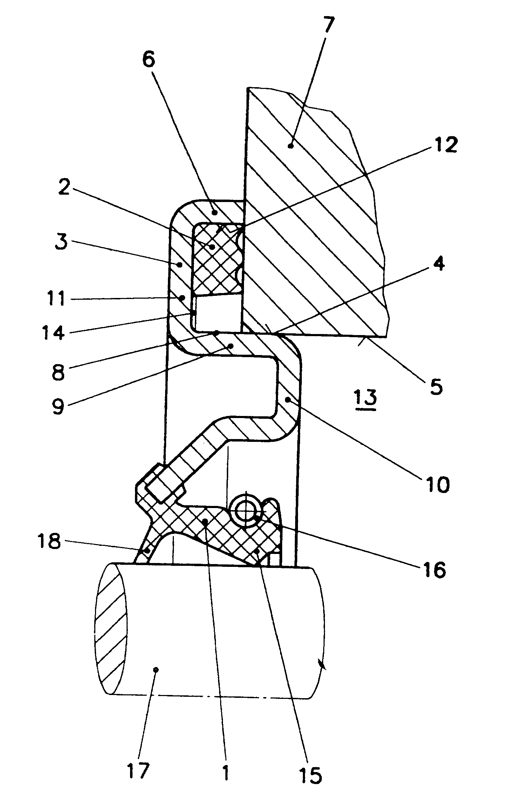

Ein Ausführungsbeispiel wird nachfolgend anhand der Zeichnung näher erläutert. Diese zeigt die zu berücksichtigenden Einzelkomponenten teilweise in schematischer Darstellung.

In der Figur ist ein Ausführungsbeispiel eines Radialwellendichtringes gezeigt, der mit seinem Zentriersitz 4 in die Gehäusebohrung 5 des Gehäuses 7 eingepreßt ist. Der Radialwellendichtring weist eine dynamisch beanspruchte erste Dichtung 1 und eine statisch beanspruchte zweite Dichtung auf, wobei die erste Dichtung 1 eine Dichtlippe 15 aufweist, die durch eine Ringwendelfeder 16 in radialer Richtung an die abzudichtende Welle 17 angepreßt ist und diese unter radialer Vorspannung dichtend umschließt. Auf der dem abzudichtenden Raum 13 abgewandten Seite der Dichtlippe 15 ist eine Vorschaltdichtung 18 angeordnet, die einstückig ineinander übergehend und materialeinheitlich mit der Dichtlippe 15 ausgebildet ist und einen Bestandteil der ersten Dichtung 1 bildet. Die zweite Dichtung 2 ist auf der dem Gehäuse 7 zugewandten Seite mit einer sich in radialer Richtung erstreckenden Wellung versehen, wobei die Erhebungen und die in radialer Richtung beiderseits angrenzenden Vertiefungen jeweils in Umfangsrichtung ringförmig ausgebildet sind. Bei einer derartigen Ausgestaltung ist von Vorteil, daß der imkompressible elastomere Werkstoff bei seiner Verformung in die Vertiefungen auszuweichen vermag und daher Biege-/Schubbeanspruchungen, die zu einer Ablösung der zweiten Dichtung 2 vom Schutzring 3 führen könnten, vermieden wird.

Radial außenseitig ist der Stützring 3 mit einem Axialvorsprung 6 versehen, der im montierten Zustand des Radialdichtrings das Gehäuse 7 anliegend berührt. Der Axialvorsprung 6 schützt die zweite Dichtung 2 vor mechanischen, äußeren Einflüssen und einer unzulässig hohen Druckbeanspruchung in axialer Richtung während und im Anschluß an die Montage des Radialwellendichtrings am Gehäuse 7. Bei einer vorherbestimmten, elastischen Vorspannung der zweiten Dichtung 2 legt sich der Axialvorsprung 6 an das Gehäuse 7 an und verhindert dadurch eine noch größere, unnötig hohe, die Gebrauchsdauer der zweiten Dichtung 2 reduzierende Verformung. Die zweite Dichtung 2 dichtet das abzudichtende Medium daher während einer sehr langen Gebrauchsdauer einwandfrei ab. In diesem Ausführungsbeispiel besteht der Stützring 3 aus einem teilziehbaren Blech und weist einen im wesentlichen S-förmigen Querschnitt auf. Der Zentriersitz 4 ist durch die Außenumfangsfläche 8 des Axialstegs 9 gebildet, wobei der Axialsteg 9 die beiden Radialstege 10, 11 des Stützrings 3 miteinander verbindet. Die zweite Dichtung 2 ist am Innenumfang 12 des Axialvorsprungs 6 sowie mit der dem abzudichtenden Raum 13 zugewandten Seite 14 des radial äußeren Radialstegs 11 durch Vulkanisation verbunden.

## Patentansprüche

1. Radialwellendichtring mit zumindest einer dynamisch beanspruchten ersten Dichtung (1) und zumindest einer statisch beanspruchten zweiten Dichtung (2), die mit einem Stützring (3) verbunden sind, welcher mit einem Zentriersitz (4) in einer Gehäusebohrung (5) festlegbar ist, einen im wesentlichen S-förmigen Querschnitt hat und einen Axialvorsprung (6) aufweist, der die zweite Dichtung (2) zur Begrenzung ihrer elastischen Verformung zumindest teilweise überdeckt und an ein abzudichtendes Gehäuse (7) anlegbar ist, **dadurch gekennzeichnet, daß** der Zentriersitz (4) durch eine Außenumfangsfläche (8) eines die Radialstege (10, 11) des Stützrings (3) verbindenden Axialstegs (9) gebildet ist, und die zweite Dichtung (2) auf einer dem Gehäuse (7) zugewandten Seite (12) mit einer sich in radialer Richtung erstreckenden Wellung versehen ist.

2. Radialwellendichtring nach Anspruch 1, **dadurch gekennzeichnet, daß** die sich in radialer Richtung erstreckende Wellung Erhebungen und in radialer Richtung beiderseits angrenzende Vertiefungen mit jeweils in Umfangsrichtung ringförmiger Ausbildung umfaßt.

3. Radialwellendichtring nach Anspruch 1 oder 2, **dadurch gekennzeichnet, daß** der Stützring (3) aus einem zähharten Werkstoff besteht.

4. Radialwellendichtring nach einem der Ansprüche 1 bis 3, **dadurch gekennzeichnet, daß** die erste (1) und die zweite Dichtung (2) aus voneinander abweichenden, separat an den Stützring (3) angespritzten Elastomerwerkstoffen bestehen.

5. Radialwellendichtring nach einem der Ansprüche 1 bis 4, **dadurch gekennzeichnet, daß** die zweite Dichtung (2) einen im wesentlichen rechteckigen Querschnitt aufweist und mit dem Innenumfang (12) des Axialvorsprungs (6) sowie der dem abzudichtenden Raum (13) zugewandten Seite (14) des radial äußeren Radialstegs (11) abhäsiv verbunden ist.

## Claims

1. A radial shaft seal with at least one dynamically loaded first seal (1) and at least one statically loaded second seal (2), the seals being connected to a supporting ring (3) which can be secured in a housing bore (5) by way of a centring seat (4), has an essentially S-shaped cross section and an axial protrusion (6), which at least partially covers over the second seal (2), in order to limit the elastic deformation thereof, and can be positioned against a housing (7) which is to be sealed, **characterized in that** the centring seat (4) is formed by an outer circumferential surface (8) of an axial web (9) which connects the radial webs (10, 11) of the supporting ring (3), and the second seal (2) is provided, on a side (12) which is directed towards the housing (7), with a radially directed corrugation.

2. A radial shaft seal according to claim 1, **characterized in that** the radially extending corrugation comprises elevations and radially adjacent depressions, of annular design in the circumferential direction in each case.

3. A radial shaft seal according to claim 1 or 2, **characterized in that** the supporting ring (3) consists of a hard and tough material.

4. A radial shaft seal according to any one of claims 1 to 3, **characterized in that** the first seal (1) and the second seal (2) consist of different elastomer materials which are injection moulded separately onto the supporting ring (3).

5. A radial shaft seal according to any one of claims 1 to 4, **characterized in that** the second seal (2) has an essentially rectangular cross section and is abhesively connected to the inner circumference (12) of the axial protrusion (6) and the side (14) of the radially outer radial web (11), said side being directed towards the space (13) which is to be sealed.

## Revendications

1. Joint à lèvres radiales comprenant au moins une première lèvre (1) sollicitée dynamiquement et au moins une deuxième lèvre (2) sollicitée statiquement, qui sont reliées à un anneau d'appui (3) pouvant être fixé avec un siège de centrage (4) dans un perçage de carter (5), présentant une section transversale pour l'essentiel en forme de S ainsi qu'une saillie axiale (6), qui recouvre la deuxième lèvre (2) du moins partiellement pour limiter la déformation élastique de celle-ci et qui peut être appliquée sur un carter (7) devant être rendu étanche, **caractérisé en ce que** le siège de centrage (4) est formé par une surface circonférentielle extérieure (8) d'une nervure axiale (9) reliant les nervures radiales (10, 11) de l'anneau d'appui (3), et **en ce que** la deuxième lèvre (2) est pourvue d'une ondulation s'étendant dans le sens radial sur une face (12) orientée vers le carter (7).

2. Joint à lèvres radiales selon la revendication 1, **caractérisé en ce que** l'ondulation s'étendant dans le sens radial comporte des élévations et des creux adjacents de part et d'autre dans le sens radial, présentant à chaque fois une forme annulaire dans le sens circonférentiel.

3. Joint à lèvres radiales selon la revendication 1 ou 2, **caractérisé en ce que** l'anneau d'appui (3) est réalisé à partir d'un matériau semi-dur.

4. Joint à lèvres radiales selon l'une des revendications 1 à 3, **caractérisé en ce que** la première (1) et la deuxième (2) lèvres sont réalisées à partir de matériaux élastomères différents les uns des autres, injectés séparément sur l'anneau d'appui (3).

5. Joint à lèvres radiales selon l'une des revendications 1 à 4, **caractérisé en ce que** la deuxième lèvre (2) présente une section transversale pour l'essentiel rectangulaire et est reliée par adhésion à la périphérie intérieure (12) de la saillie axiale (6) ainsi qu'à la face (14) orientée vers l'espace (13) à rendre étanche de la nervure radiale (11) radialement extérieure.
